Europäisches Patentamt

European Patent Office

Office européen des brevets

(19)

(11) Numéro de publication : **0 343 082 B1**

(12) **FASCICULE DE BREVET EUROPEEN**

(45) Date de publication du fascicule du brevet :
**14.07.93 Bulletin 93/28**

(51) Int. Cl.$^5$ : **G02B 26/10, G01R 5/10**

(21) Numéro de dépôt : **89401383.8**

(22) Date de dépôt : **19.05.89**

(54) **Appareil pour réaliser le balayage d'un faisceau lumineux rigoureusment plan et parallèle à un axe donné.**

(30) Priorité : **19.05.88 FR 8806702**

(43) Date de publication de la demande :
**23.11.89 Bulletin 89/47**

(45) Mention de la délivrance du brevet :
**14.07.93 Bulletin 93/28**

(84) Etats contractants désignés :
**AT BE CH DE ES FR GB GR IT LI LU NL SE**

(56) Documents cités :
**DE-C- 693 275
FR-A- 677 992
US-A- 3 493 282
US-A- 4 002 830
US-A- 4 256 364
US-A- 4 602 154**

(73) Titulaire : **MENSI, Société à Responsabilité Limitée dite
197, rue du Temple
F-75003 Paris (FR)**
Titulaire : **ELECTRICITE DE FRANCE Service National
2, rue Louis Murat
F-75008 Paris (FR)**

(72) Inventeur : **Paramythioti, Michel
19 Bis, Septième Avenue
F-60260 Lamorlaye (FR)**

(74) Mandataire : **Nony, Michel
Cabinet NONY & CIE 29, rue Cambacérès
F-75008 Paris (FR)**

## Description

La présente invention concerne un appareil pour réaliser le balayage d'un faisceau lumineux rigoureusement plan et parallèle à un axe donné, et plus particulièrement un tel appareil comprenant un miroir de balayage, monté sur un axe de rotation sensiblement perpendiculaire audit axe donné, et dont le plan contient sensiblement ledit axe de rotation, et un dispositif optique, tel qu'une source lumineuse, sensiblement disposé dans le plan contenant ledit axe donné et perpendiculaire audit axe de rotation.

De tels appareils sont déjà bien connus dans l'état de la technique. C'est ainsi que la demande de brevet français déposée le 4 Février 1987 sous le n° 87.01360 décrit un appareil impliquant le balayage d'une scène observée par lignes successives, à l'aide d'un faisceau laser réfléchi par un miroir pivotant autour d'un axe sous l'action d'un galvanomètre.

Il arrive souvent qu'il soit nécessaire qu'au cours du balayage le faisceau lumineux reste contenu dans un même plan parallèle à un axe donne.

C'est le cas, en particulier, dans la demande de brevet précitée, où le faisceau laser forme un spot lumineux en un emplacement donné de la scène, et où l'on forme l'image de ce spot sur une barrette d'éléments photosensibles. Il importe donc que l'image de ce spot soit parfaitement centrée sur chaque élément de la barrette, et par conséquent que le balayage soit parfaitement plan et que le plan de balayage soit parallèle à l'axe de la barrette.

La précision souhaitée pour cet appareil est de l'ordre de quelques secondes d'arc pour l'angle de site du faisceau réfléchi.

Inversement, on peut souhaiter disposer d'un appareil comportant un récepteur photosensible, et ne recevoir sur ce récepteur que la lumière provenant d'un plan déterminé parallèle à un axe donné, en réalisant le balayage de ce plan à l'aide d'un miroir pivotant réfléchissant vers le récepteur photosensible la lumière provenant de ce plan.

Or, trois sources de courbure du plan de balayage sont possibles dans un appareil agencé tel que décrit ci-dessus.

Tout d'abord, la source lumineuse ou le récepteur photosensible peut se trouver légèrement au-dessus ou au-dessous du plan contenant l'axe donné et perpendiculaire à l'axe de rotation, c'est-à-dire que le faisceau lumineux ne possède pas une incidence nulle par rapport à ce plan.

Par ailleurs, les miroirs de balayage sont collés sur leur axe de rotation de sorte que, en théorie, le plan du miroir passe par cet axe. En pratique, il s'avère impossible de trouver des miroirs respectant cette condition avec la précision souhaitée qui peut atteindre quelques secondes d'arc : les miroirs galvanométriques du commerce présentent en effet des défauts de parallélisme avec leur axe pouvant dépasser 20 minutes d'arc.

Enfin, l'axe de rotation du miroir peut lui-même ne pas être rigoureusement perpendiculaire à l'axe donné.

On comprend que, si les premier et troisième défauts précités peuvent être limités par une construction soigneuse de l'appareil, il n'en est pas de même du deuxième défaut qui est inhérent au miroir lui-même.

La présente invention vise à fournir un dispositif permettant de remédier à ces trois défauts, et plus particulièrement au deuxième, c'est-à-dire à obtenir un balayage dans un plan parallèle à un axe donné, tout en utilisant un miroir imparfaitement collé sur son axe de rotation.

A cet effet, l'invention a pour objet un appareil pour réaliser le balayage quasi-rigoureusement plan et parallèle à un axe donné d'un faisceau lumineux, ledit appareil comprenant un miroir de balayage, monté sur un axe de rotation sensiblement perpendiculaire audit axe donné, et dont le plan contient sensiblement ledit axe de rotation, et un dispositif optique, soit une source lumineuse soit un récepteur photosensible, sensiblement disposé dans le plan contenant ledit axe donné et perpendiculaire audit axe de rotation, ledit appareil étant caractérisé par le fait qu'il comprend des premiers moyens de réglage du dispositif optique pour régler l'angle d'inclinaison du faisceau lumineux issu dudit dispositif par rapport à un plan prédéterminé passant par ledit axe donné et sensiblement perpendiculaire audit axe de rotation du miroir, et des deuxièmes moyens de réglage pour régler l'inclinaison de l'axe de rotation du miroir par rapport audit plan prédéterminé.

On remarquera que ces premier et deuxième réglages correspondent en première approximation aux corrections à apporter aux premier et troisième défauts précités.

Or, les déposants ont constaté que, d'une manière surprenante, ces deux réglages permettent à eux seuls d'éliminer pratiquement totalement les trois défauts, et notamment le deuxième, à savoir celui lié au collage du miroir sur son axe de rotation.

Dans un mode de réalisation particulier de l'invention, lesdits premiers moyens de réglage comprennent une première structure pivotante d'inclinaison réglable autour dudit axe donné, le dispositif optique étant monté sur cette première structure pivotante.

Egalement selon un mode de réalisation particulier de l'invention, lesdits deuxièmes moyens de réglage comprennent une deuxième structure pivotante autour d'un axe de réglage sensiblement contenu dans ledit

2

plan prédéterminé, l'axe de rotation du miroir étant monté sur cette deuxième structure pivotante.

Plus particulièrement, cet axe de réglage peut être sensiblement perpendiculaire audit axe donné.

On décrira maintenant à titre d'exemple non limitatif un mode de réalisation particulier de l'invention en référence aux dessins schématiques annexés dans lesquels :

- les figures 1A, 2A et 3A illustrent chacune l'un des trois défauts précités des appareils de l'art antérieur,
- les figures 1B, 2B et 3B représentent le résultat de chacun de ces défauts sur un écran disposé à une certaine distance de l'appareil, parallèle à l'axe donné et à l'axe de rotation du miroir,
- la figure 4 est une vue en élévation partiellement en coupe d'un appareil selon l'invention, et
- la figure 5 en est une vue de dessus, également partiellement en coupe.

Sur les figures 1A, 2A et 3A, on a désigné par :
- M, le miroir de balayage,
- MXYZ, un trièdre tri-rectangle de référence, lié au dispositif, et tel que MX soit l'axe donné parallèlement auquel on souhaite effectuer le balayage, et que le plan XMY soit le plan théorique de balayage, MZ étant l'axe théorique de rotation du miroir.
- IM, le faisceau incident,
- MR, le faisceau réfléchi,
- MN, la normale au miroir,
- iM, la projection, s'il y a lieu, du faisceau incident IM dans le plan XMY,
- Mr, la projection, s'il y a lieu, du faisceau réfléchi MR dans le plan XMY,
- Mn, la projection, s'il y a lieu, de la normale au miroir MN dans le plan XMY,
- $\phi$, l'angle d'azimut du faisceau incident IM,
- $\alpha$, le complément de l'angle d'azimut du faisceau réfléchi MN,
- n, l'angle formé entre le faisceau incident IM (ou sa projection iM) avec la normale au miroir MN (ou sa projection Mn),
- i, l'angle de site du faisceau incident IM par rapport au plan XMY,
- j, l'angle formé par la normale au miroir MN et le plan XMY,
- $\theta$, l'angle formé par l'axe de rotation du miroir avec l'axe MZ, dans le plan XMZ.

La figure 1A illustre le premier défaut possible, c'est-à-dire une incidence i non nulle du faisceau incident IM, par rapport au plan XMY. L'erreur résultante est un angle de site parasite $r_1$ du faisceau réfléchi MR.

La figure 2A illustre le deuxième défaut, à savoir un angle j non nul entre le plan du miroir et son axe de rotation (défaut de collage). L'erreur résultante est un angle de site parasite $r_2$ du faisceau réfléchi MR.

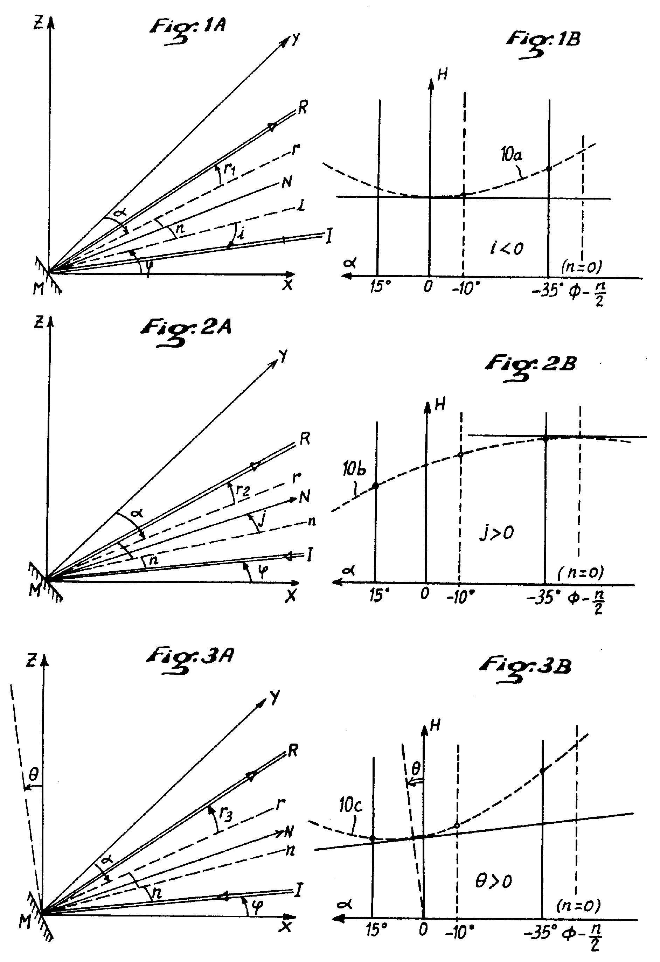

La figure 3A illustre le troisième défaut, c'est-à-dire un angle $\theta$ non nul entre l'axe de rotation du miroir et l'axe MZ. L'erreur résultante est un angle de site parasite $r_3$ du faisceau réfléchi MR.

Les figures 1B, 2B, 3B montrent les courbes suivies par un spot lumineux résultant de l' interception du faisceau réfléchi MR par un écran perpendiculaire à l'axe MY, placé à une certaine distance du miroir M, c'est-à-dire par la trace du faisceau réfléchi MR dans le plan de cet écran, lorsque le miroir tourne autour de son axe de rotation, c'est-à-dire lorsque $\alpha$ varie. L'axe OH est l'axe de l'écran contenu dans le plan YMZ.

La courbe 10a de la figure 1B montre le défaut de planéité du balayage résultant d'un angle i non nul lorsque l'angle $\alpha$ (égal à $\phi$ +2n - 90°) varie. On peut montrer que cette courbe est une hyperbole dont l'axe est vertical et situé dans le plan YMZ.

La courbe 10b de la figure 2B représente le défaut de planéité dû à un angle j non nul lorsque l'angle $\alpha$ varie. On peut montrer que cette courbe est un arc de forme sinusoïdale atteignant son maximum pour n = 0, c'est-à-dire un arc "incliné" pour des valeurs normales de l'angle n.

Enfin la courbe 10c de la figure 3B montre le défaut de planéité résultant d'un angle $\theta$ non nul. On peut montrer que cette courbe est une hyperbole dont l'axe est incliné d'un angle $\theta$ par rapport au plan XMZ.

L'invention consiste essentiellement à avoir rendu les angles i et $\theta$ ajustables à une valeur quelconque indéterminée, au lieu de tenter de les réduire, par construction du dispositif, à une valeur fixe aussi proche que possible de zéro.

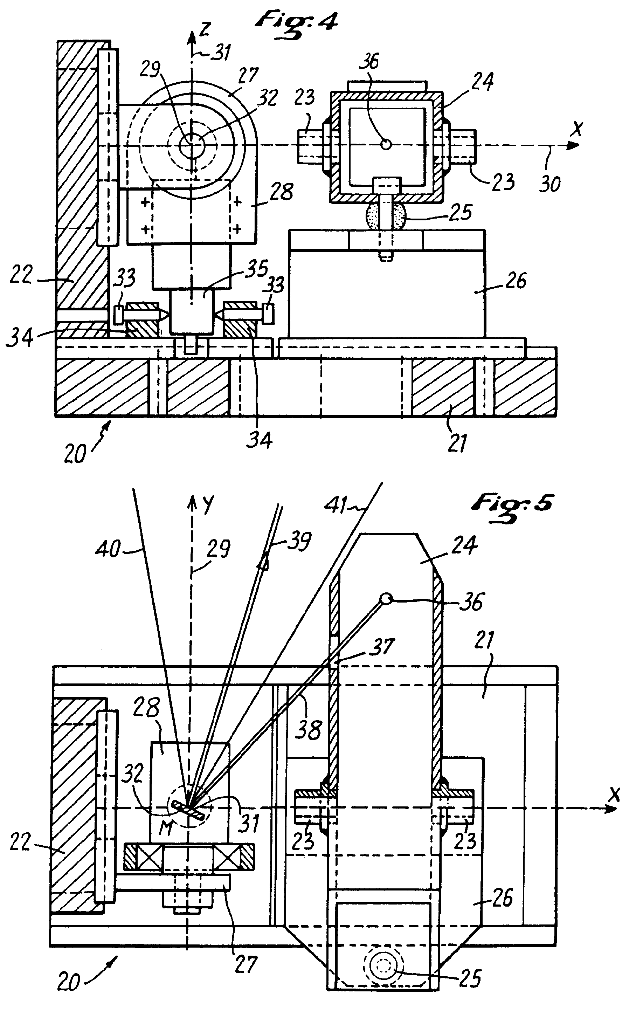

Le dispositif selon l'invention, représenté aux figures 4 et 5, comporte un bâti 20 formé d'un socle 21 et d'un montant 22.

Le socle 21 reçoit, dans des paliers non représentés, les arbres de rotation 23 d'une structure pivotante 24 réalisée, dans le cas présent, sous la forme d'un tube à section carrée. L'axe 30 des paliers est sensiblement parallèle à l'axe donné parallèlement auquel on souhaite effectuer le balayage.

Une vis de règlage 25, coopérant avec un filetage formé dans un support 26 solidaire de la base 21, permet de régler l'inclinaison de la structure 24 autour des arbres 23.

Le montant 22 reçoit dans un palier 27 une deuxième structure 28, pivotante autour d'un axe 29 sensiblement coplanaire et perpendiculaire à l'axe 30 des arbres 23.

La structure pivotante 28 reçoit l'axe de rotation 31 d'un miroir 32 pouvant être entraîné en rotation par un galvanomètre (non représenté) également monté sur la structure 28.

L'inclinaison de la structure 28 autour de l'axe 29 peut être réglée à l'aide de vis de reglage 33, formant butées, montées dans des organes 34 solidaires du socle 21 et coopérant avec un prolongement 35 de la structure pivotante 28.

L'axe de rotation 31 est monté approximativement perpendiculaire à l'axe 30 pour une valeur moyenne du réglage 33.

Un émetteur laser 36 est monté dans le tube 24, approximativement dans le plan passant par l'axe 30 et perpendiculaire à l'axe de rotation 31 du miroir pour une valeur moyenne des réglages 25 et 33. Une fenêtre 37 formée dans ce tube permet d'éclairer le miroir 32 à partir de cet émetteur.

Lorsque le miroir 32 pivote sous l'action du galvanomètre, le faisceau lumineux 38 issu de l'émetteur laser consistant en une diode 36 se réfléchit en 39 sur le miroir 32 et effectue un balayage entre deux limites de champ 40 et 41. Ce balayage s'effectue à peu près dans un plan parallèle à l'axe 30, sous réserve d'un réglage convenable des vis 25 et 33.

On reconnaît dans l'axe 30 l'axe MX des figures 1A, 2A et 3A, et dans l'axe 29 approximativement l'axe MY. L'axe 31 n'est approximativement confondu avec l'axe MZ que pour une valeur donnée du réglage des vis 33.

Toutefois, la différence essentielle avec ce qui a été décrit précédemment est que les angles de rotation des structures 24 et 28 autour des axes 29 et 30 ne sont pas des erreurs comme l'étaient les angles i et $\theta$ des figures 1A et 3A, mais des valeurs de réglage du dispositif.

On remarquera d'ailleurs qu'il n'existe aucune référence, ou aucun zéro, pour ces angles de rotation, qui ne sont définis que par leurs variations dans un sens ou dans l'autre. Le positionnement relatif des axes 29 et 30, qui seul pourrait constituer une référence, est en effet beaucoup trop grossier pour la précision souhaitée.

Le réglage s'effectue par approximations successives en utilisant une règle, disposée à une certaine distance du dispositif parallèlement à l'axe 30, et sur laquelle est montée un capteur bidirectionnel coulissant le long de la règle. Ce capteur permet de mesurer en divers points de la règle la hauteur du faisceau au-dessus ou au-dessous du plan déterminé par les axes 29 et 30.

Les tableaux 1 à 4 suivants montrent les résultats d'une simulation d'un tel réglage.

On a supposé dans cette simulation que le défaut de collage du miroir sur son axe, c'est-à-dire l'angle j, était égal à 25 minutes d'arc, que l'angle $\phi$, c'est-à-dire l'angle entre le faisceau 38 et l'axe 30 était égal à 45°, et que la règle précitée était disposée à une distance D= 4,60 m de l'axe 30.

Le champ de balayage a été supposé compris entre +15° et -35°, c'est-à-dire que les limites 40 et 41 font avec l'axe 29 des angles de 15° et 35° respectivement.

Ces tableaux donnent successivement pour différentes valeurs de l'angle en degrés:
- les valeurs correspondantes de n en degrés et en radians,
- les valeurs des angles $r_1$, $r_2$ et $r_3$ en milliradians,
- la valeur de la somme $r_1+r_2+r_3$ en milliradians,
- la hauteur rD/cos $\alpha$ en millimètres du faisceau lumineux au-dessus de la règle,
- la hauteur équivalente $r_0$D/cos $\alpha$ en micromètres après rotation de l'appareil autour de l'axe 30, de manière à ramener à zéro cette hauteur au milieu du champ
- et la valeur en secondes d'arc de l'angle $r_0$, caractéristique du défaut de planéité du faisceau.

On a supposé arbitrairement que les angles i et $\theta$ de départ avaient une valeur nulle, de sorte que, dans le tableau 1, les angles $r_1$ et $r_3$ sont eux aussi égaux à zéro.

On constate dans ce même tableau 1 que le défaut de collage du miroir engendre un très important défaut de planéité, puisque le faisceau lumineux s'écarte de sa valeur médiane prise comme référence de -108,42 secondes d'arc à une des extrémités du champ, et de +609,30 secondes d'arc à l'autre extrémité du champ, ce qui correspond à plus de 2 centimètres d'écart en hauteur au niveau de la règle.

Le tableau 5 montre sur quel paramètre i ou $\theta$ agir, et dans quel sens, en fonction du sens de l'erreur à chaque extrémité du champ après avoir ramené à zéro l'erreur au milieu du champ. Dans le cas du tableau 1, $r_0$ varie d'une valeur négative à une valeur positive, de sorte qu'il y a lieu d'appliquer une correction négative sur l'angle $\theta$.

On a donc appliqué une correction sur $\theta$ égale à -10 minutes d'arc.

On constate déjà dans le tableau 2 qui en résulte, une nette amélioration de la planéité, puisque le faisceau ne s'écarte jamais de plus de 280,13 secondes d'arc de sa valeur médiane, ce qui correspond à une hauteur de moins de 8 millimètres au niveau de la règle.

Comme $r_0$ varie dans ce cas d'une valeur positive à une autre valeur positive, le tableau 5 montre qu'il y a lieu d'appliquer une correction positive sur l'angle i.

Le tableau 3 montre le résultat obtenu avec une correction de + 28 minutes d'arc sur l'angle i.

Le défaut de planéité n'est plus maintenant que de l'ordre de 13 secondes d'arc, soit environ 300 micromètres au niveau de la règle.

Comme $r_0$ varie maintenant d'une valeur positive à une valeur négative, le tableau 5 montre qu'il faut appliquer une correction positive sur $\theta$.

Les étapes suivantes n'ont pas été illustrées, mais le tableau 4 donne le résultat final avec une correction positive de 28,80 minutes d'arc sur l'angle i et une correction négative de 9,64 minutes d'arc sur l'angle $\theta$.

L'erreur angulaire n'est plus que de l'ordre de 2 secondes d'arc, ou d'environ 50 micromètres au niveau de la règle.

Cette simulation montre qu'il est par conséquent possible, grâce à l'invention, de ramener le défaut de planéité à une valeur de l'ordre de quelque secondes d'arc, en dépit d'un défaut de collage du miroir de 25 minutes d'arc.

TABLEAU 1
$(i=0 \; ; \; \theta =0)$

| $\alpha$ (°) | | 15 | 10 | 0 | -10 | -20 | -30 | -35 |
|---|---|---|---|---|---|---|---|---|
| n | (°) | 30 | 27,5 | 22,5 | 17,5 | -12,5 | 7,5 | 5 |
| | (rad) | 0,52 | 0,48 | 0,39 | 0,31 | 0,22 | 0,13 | 0,09 |
| $r_1$ (mrad) | | 0 | 0 | 0 | 0 | 0 | 0 | 0 |
| $r_2$ (mrad) | | 12,62 | 12,93 | 13,47 | 13,90 | 14,23 | 14,45 | 14,52 |
| $r_3$ (mrad) | | 0 | 0 | 0 | 0 | 0 | 0 | 0 |
| $r$ (mrad) = $r_1 + r_2 + r_3$ | | 12,62 | 12,93 | 13,47 | 13,90 | 14,23 | 14,45 | 14,52 |
| $rD/\cos \alpha$ (mm) | | 60,12 | 60,40 | 61,95 | 64,94 | 69,67 | 76,77 | 81,55 |
| $r_0 D/\cos \alpha$ ($\mu$m) | | -4818 | -4542 | -2987 | 0 | 4729 | 11828 | 16610 |
| $r_0$ (") | | -208,42 | -200,31 | -133,78 | 0 | 199,00 | 458,73 | 609,30 |

TABLEAU 2

$(i=0 \; ; \; \theta = -10')$

| $\alpha$ (°) | | 15 | 10 | 0 | -10 | -20 | -30 | -35 |
|---|---|---|---|---|---|---|---|---|
| n | (°) | 30 | 27,5 | 22,5 | 17,5 | 12,5 | 7,5 | 5 |
| | (rad) | 0,52 | 0,48 | 0,39 | 0,31 | 0,22 | 0,13 | 0,09 |
| $r_1$ (mrad) | | 0 | 0 | 0 | 0 | 0 | 0 | 0 |
| $r_2$ (mrad) | | 12,62 | 12,93 | 13,47 | 13,90 | 14,23 | 14,45 | 14,52 |
| $r_3$ (mrad) | | -1,31 | -1,56 | -2,06 | -2,57 | -3,06 | -3,52 | -3,73 |
| $r$ (mrad) = $r_1 + r_2 + r_3$ | | 11,32 | 11,37 | 11,41 | 11,33 | 11,17 | 10,93 | 10,79 |
| $rD/\cos \alpha$ (mm) | | 5,90 | 53,13 | 52,47 | 52,94 | 54,69 | 58,07 | 60,58 |
| $r_0 D/\cos \alpha$ (µm) | | 952 | 187 | -476 | 0 | 1750 | 5129 | 7636 |
| $r_0$ (") | | 41,17 | 8,27 | -21,33 | 0 | 73,65 | 198,92 | 280,13 |

TABLEAU 3

$(i=28' \; ; \; \theta = -10')$

| $\alpha$ (°) | | 15 | 10 | 0 | −10 | −20 | −30 | −35 |
|---|---|---|---|---|---|---|---|---|
| n | (°) | 30 | 27,5 | 22,5 | 17,5 | 12,5 | 7,5 | 5 |
| | (rad) | 0,52 | 0,48 | 0,39 | 0,31 | 0,22 | 0,13 | 0,09 |
| $r_1$ (mrad) | | −8,16 | −8,16 | −8,16 | −8,16 | −8,16 | −8,16 | −8,16 |
| $r_2$ (mrad) | | 12,62 | 12,93 | 13,47 | 13,90 | 14,23 | 14,45 | 14,52 |
| $r_3$ (mrad) | | −1,31 | −1,56 | −2,06 | −2,57 | −3,06 | −3,52 | −3,73 |
| $r$ (mrad) = $r_1 + r_2 + r_3$ | | 3,15 | 3,21 | 3,24 | 3,17 | 3,01 | 2,77 | 2,68 |
| $rD/\cos \alpha$ (mm) | | 15,02 | 15,00 | 14,92 | 14,81 | 14,73 | 14,71 | 14,74 |
| $r_0 D/\cos \alpha$ (µm) | | 206 | 187 | 103 | 0 | −81 | −101 | −75 |
| $r_0$ (") | | 8,93 | 8,27 | 4,61 | 0 | −3,39 | −3,91 | −2,74 |

TABLEAU 4

$(i=28,80'\ ;\ \theta=-9,64')$

| $\alpha$ (°) | | 15 | 10 | 0 | -10 | -20 | -30 | -35 |
|---|---|---|---|---|---|---|---|---|
| n | (°) | 30 | 27,5 | 22,5 | 17,5 | 12,5 | 7,5 | 5 |
| | (rad) | 0,52 | 0,48 | 0,39 | 0,31 | 0,22 | 0,13 | 0,09 |
| $r_1$ (mrad) | | -8,40 | -8,40 | -8,40 | -8,40 | -8,40 | -8,40 | -8,40 |
| $r_2$ (mrad) | | 12,62 | 12,93 | 13,47 | 13,90 | 14,23 | 14,45 | 14,52 |
| $r_3$ (mrad) | | -1,26 | -1,50 | -1,99 | -2,48 | -2,95 | -3,39 | -3,60 |
| $r$ (mrad) = $r_1+r_2+r_3$ | | 2,97 | 3,03 | 3,08 | 3,03 | 2,89 | 2,66 | 2,53 |
| $rD/\cos\alpha$ (mm) | | 14,13 | 14,17 | 14,19 | 14,16 | 14,13 | 14,15 | 14,18 |
| $r_0 D/\cos\alpha$ ($\mu$m) | | -23 | 17 | 29 | 0 | -26 | -9 | 28 |
| $r_0$ (") | | -0,98 | 0,76 | 1,31 | 0 | -1,08 | -0,35 | 1,03 |

TABLEAU 5

| $r_0$ | - + | + - | + + | - - |
|---|---|---|---|---|
| Correction i | 0 | 0 | + | - |
| Correction $\theta$ | - | + | 0 | 0 |

## Revendications

1. Appareil pour réaliser le balayage quasi-rigoureusement plan et parallèle à un axe donné (30) d'un faisceau lumineux, ledit appareil comprenant un miroir de balayage (32), monté sur un axe de rotation (31) sensiblement perpendiculaire audit axe donné, et dont le plan contient sensiblement ledit axe de rotation, et un dispositif optique (36), soit une source lumineuse soit un récepteur photosensible, sensiblement disposé dans le plan contenant ledit axe donné et perpendiculaire audit axe de rotation, ledit appareil étant caractérisé par le fait qu'il comprend des premiers moyens de réglage (25) du dispositif optique pour régler l'angle d'inclinaison du faisceau lumineux par rapport à un plan prédéterminé passant par ledit axe donné et sensiblement perpendiculaire audit axe de rotation du miroir, et des deuxièmes moyens de réglage (33) pour régler l'inclinaison de l'axe de rotation du miroir par rapport audit plan prédéterminé.

2. Appareil selon la revendication 1, caractérisé par le fait que lesdits premiers moyens de réglage comprennent une première structure pivotante, d'inclinaison réglable autour dudit axe donné, le dispositif optique étant monté sur cette première structure pivotante.

3. Appareil selon l'une quelconque des revendications 1 et 2, caractérisé par le fait que lesdits deuxièmes moyens de réglage comprennent une deuxième structure pivotante (28) autour d'un axe de réglage (29) sensiblement contenu dans ledit plan prédéterminé, l'axe de rotation du miroir étant monté sur cette deuxième structure pivotante.

4. Appareil selon la revendications 3, caractérisé par le fait que ledit axe de réglage est sensiblement perpendiculaire audit axe donné.

## Patentansprüche

1. Vorrichtung zum Realisieren des Durchrasterns eines Lichtstrahls quasigenau eben und parallel zu einer gegebenen Achse (30), welche Vorrichtung einen Durchrasterspiegel (32), der auf einer im wesentlichen rechtwinklig zur gegebenen Achse stehenden Drehachse (31) angebracht ist und dessen Ebene die Drehachse im wesentlichen enthält, und eine optische Vorrichtung (36) entweder als Lichtquelle oder als lichtempfindlicher Empfänger aufweist, die im wesentlichen in der die gegebene Achse enthaltenden Ebene und rechtwinklig zur genannten Drehachse angeordnet ist, welche Vorrichtung **dadurch gekennzeichnet** ist, daß sie eine erste Einstelleinrichtung (25) für die optische Vorrichtung aufweist, um den Neigungswinkel des Lichtstrahls in Bezug auf eine vorgegebene Ebene einzustellen, die durch die gegebene Achse geht und im wesentlichen rechtwinklig zur Spiegeldrehachse steht, und eine zweite Einstelleinrichtung (33) aufweist, um die Neigung der Spiegeldrehachse in Bezug auf die vorgegebene Ebene einzustellen.

2. Vorrichtung nach Anspruch 1, **dadurch gekennzeichnet,** daß die erste Einstelleinrichtung eine erste schwenkbare Struktur mit um die gegebene Achse einstellbarer Neigung aufweist, wobei die optische Vorrichtung auf dieser ersten schwenkbaren Struktur angebracht ist.

3. Vorrichtung nach einem der Ansprüche 1 oder 2, **dadurch gekennzeichnet,** daß die zweite Einstelleinrichtung eine zweite schwenkbare Struktur (28) aufweist, die um eine im wesentlichen in der vorgegebenen Ebene liegende Einstellachse (29) schwenkbar ist, wobei die Spiegeldrehachse auf dieser zweiten schwenkbaren Struktur angebracht ist.

4. Vorrichtung nach einem der Ansprüche 1 bis 3, **dadurch gekennzeichnet,** daß die Einstellachse im wesentlichen rechtwinklig auf der gegebenen Achse steht.

## Claims

1. An apparatus for causing a beam of light to sweep almost strictly in one plane parallel with a given axis (30), the said apparatus comprising a sweep mirror (32) which is mounted upon an axis (31) of rotation substantially perpendicular to the said given axis and the plane of which substantially contains the said axis of rotation, and an optical device (36), either a source of light or a photosensitive receiver, arranged substantially in the plane which contains the said given axis and is perpendicular to the said axis of rotation, the said apparatus being characterized by the fact that it comprises first means (25) of adjustment of the optical device for adjusting the angle of inclination of the beam of light with respect to a predetermined plane which passes through the said given axis and is substantially perpendicular to the said axis of rotation of the mirror, and second means (33) of adjustment for adjusting the inclination of the axis of rotation of the mirror with respect to the said predetermined plane.

2. An apparatus as in Claim 1, characterized by the fact that
   the said first means of adjustment comprise a first pivoting structure the inclination of which is adjustable about the said given axis, the optical device being mounted upon this first pivoting structure.

3. An apparatus as in either of the Claims 1 and 2, characterized
   by the fact that the said second means of adjustment comprise a second structure (28) pivoting about an axis of adjustment (29) which is contained substantially in the said predetermined plane, the axis of rotation of the mirror being mounted upon this second pivoting structure.

4. An apparatus as in Claim 3, characterized by the fact that
   the said axis of adjustment is substantially perpendicular to the said given axis.

Fig: 1A

Fig: 1B

Fig: 2A

Fig: 2B

Fig: 3A

Fig: 3B

Fig. 4

Fig. 5